# EUROPÄISCHE PATENTSCHRIFT

(11) **EP 2 163 772 B1**
(45) Veröffentlichungstag und Bekanntmachung des Hinweises auf die Patenterteilung: **05.12.2012**
(21) Anmeldenummer: 09010020.7
(22) Anmeldetag: 04.08.2009
(51) Int. Cl.: F16B 19/10, F16B 21/00, F16B 21/16

(54) **Rastbolzen mit Rastsperre und Entriegelungsknopf**
Locking pin with rest lock and release button
Boulon d'arrêt doté d'un cran d'arrêt et d'une tête de déverrouillage

(30) Priorität: 13.09.2008 DE 102008047041
(43) Veröffentlichungstag der Anmeldung: 17.03.2010
(73) Patentinhaber: Otto Ganter GmbH & Co. KG Normteilefabrik, 78120 Furtwangen (DE)
(72) Erfinder: Kienzler, Rudolf, 78120 Furtwangen (DE)
(74) Vertreter: Riebling, Peter

(56) Entgegenhaltungen:
- DE-A1-102007 004 357

## Beschreibung

Mit dem auf den gleichen Anmelder zurückgehenden Deutschen Patent DE 102007004357 B1 ist ein Rastbolzen mit Sperrfunktion bekannt geworden, bei der in einer Führungshülse federbelastend axial verschiebbar ein Ziehknopf angeordnet ist, der von einem Entriegelungsknopf durchsetzt ist. Aus der DE 103 38 621 A1 ist lediglich ein federbelasteter Rastbolzen mit einem Betätigungsknopf und Rastsperre bekannt, die jedoch auf den Innenumfang einer zweiteilig ausgebildeten Hülse verlegt ist. Dies erschwert die Montage und erhöht die Herstellungskosten.

Auch bei dem älteren Recht ist die Rastmechanik des Rastbolzens in den radial inneren Bereich der Führungshülse verlegt und zwar in dem Bereich der dortigen Innenbohrung.

Damit besteht jedoch der Nachteil, dass die Montage und die Fertigung der Führungshülse außerordentlich aufwendig sind. Ebenso besteht der Nachteil, dass auch der Raststift relativ aufwendig gefertigt werden muss, denn er muss zweistückig ausgebildet sein und der als Rastelement verwendete Kippdübel ist schwierig zu montieren und ist nicht in der Lage, hohe axiale Rastkräfte aufzunehmen.

Der Erfindung liegt deshalb die Aufgabe zu Grunde, einen Rastbolzen mit Rastsperre und Entriegelungsknopf nach der eigenen DE 102007004357 B1 so weiter zu bilden, dass bei der Aufnahme wesentlich höherer Rastkräfte eine einfachere Herstellung des Raststiftes und der Führungshülse gegeben ist.

Zur Lösung der gestellten Aufgabe ist die Erfindung durch die technische Lehre des Anspruches 1 gekennzeichnet.

Wichtig, ist, dass die Rastmechanik nun unmittelbar am Entriegelungsknopf und zwar im Zwischenraum zwischen dem axial unteren Rand des Entriegelungsknopfes und dem Ziehknopf angeordnet ist.

Am Entriegelungsknopf sind hierbei ein oder mehrere in axialer Richtung sich erstreckende und in radialer Richtung einseitig federnd ausgebildete Federschenkel angeformt, an deren freien äußeren und federnd ausgebildeten Enden jeweils eine Wulstlippe angeformt ist, die gegeneinander gerichtete Keilflächen ausbildet, welche der Verrastung im Bereich zwischen dem Ziehknopf und der Führungshülse dienen.

Mit der gegebenen technischen Lehre ergibt sich der wesentliche Vorteil, dass die gesamte Rastmechanik in den Bereich des Ziehknopfes verlegt ist, weil der Entriegelungsknopf, der die vorher genannten Federschenkel trägt, federbelastet axial verschiebbar im Ziehknopf angeordnet ist.

Damit ergibt sich eine besonders einfache Montage im Vergleich zu dem DE 103 38 621 A1, denn es bedarf keiner Eingriffe in eine Mittelbohrung einer Führungshülse, weil bei der vorliegenden Erfindung die Mittelbohrung der Führungshülse praktisch durchgehend gleichbleibend ausgebildet ist und dort kein Eingriff für die Rastmechanik notwendig ist.

Ferner bedarf es keiner aufwendigen Bearbeitung des Raststiftes, weil nach dem älteren Patent die Rastmechanik mit dem Kippdübel im Raststift angeordnet ist, was bei der früheren Erfindung vermieden wird.

Wichtig bei der vorliegenden Erfindung ist außerdem, dass die gesamte Rastmechanik auf den Außenumfang der Führungshülse verlegt ist, was mit dem Vorteil verbunden ist, dass sehr hohe Rastkräfte übertragen werden können. Damit ist auch eine einfache Fertigung der Führungshülse möglich, denn diese besteht in der Regel aus einem metallischen Drehteil, welches dadurch sehr einfach herstellbar ist.

Der Ziehknopf selbst besteht bevorzugt aus einem Kunststoffteil, welches eine entsprechende Innenbearbeitung benötigt und diese Innenbearbeitung erfolgt einfach durch eine spritzgusstechnische Herstellung des Ziehknopfes, was besonders einfach und kostengünstig ist. Es bedarf deshalb keiner Ausbildung des Ziehknopfes als Metallteil.

Damit besteht also der wesentliche Vorteil, dass die ganze Rastmechanik an den Außenumfang der Führungshülse verlegt ist, wodurch - wie vorher bereits schon betont - hohe Rastkräfte übertragen werden können, d. h. es wird eine hohe Haltekraft erzielt, wie sie bei dem älteren Patent nicht erzielt werden konnte.

Es handelt sich hierbei um die Übertragung hoher axialer Kräfte, die in diesem Umfang nicht durch das ältere Patent übertragen werden konnten.

Selbstverständlich sieht die vorliegende Erfindung als mögliches, weiteres Ausführungsbeispiel nicht nur vor, dass die Rastmechanik auf den Außenumfang der Führungshülse verlegt ist, sondern in einer davon abgewandelten Ausführungsform sieht die Erfindung vor, dass die Rastmechanik ebenfalls - wie es das ältere Patent beschreibt - auf den Innenumfang der Führungshülse verlegt ist.

Es handelt sich um eine äquivalente Ausführungsform der Erfindungsbeschreibung, woraus sich ergibt, dass die nachfolgenden beschriebenen Ausführungsformen, welche die Rastmechanik am Außenumfang der Führungshülse anordnen, in äquivalenter Weise umgesetzt werden können, einfach nur dadurch, dass alle Teile, die am Außenumfang der Führungshülse angeordnet sind, nunmehr am Innenumfang der Führungshülse angeordnet sind und mit den zugeordneten - entsprechend äquivalent umgearbeiteten Teilen - von Ziehknopf und Entriegelungsknopf zusammenarbeiten.

In einer bevorzugten Ausgestaltung der vorliegenden Erfindung ist es vorgesehen, dass die vorher erwähnten, der Rastmechanik zugeordneten Federschenkel, werkstoffeinstückig mit dem Entriegelungsknopf verbunden sind. Hierbei ist es vorgesehen, eine beliebige Anzahl von Federschenkeln gleichmäßig am Umfang verteilt unter gegenseitigem Abstand als Entriegelungsknopf auszubilden. Als bevorzugte Ausgestaltung ist es vorgesehen, dass drei Federschenkel im Winkel von 120° am Umfang des Entriegelungsknopfes angeordnet sind.

Hierauf ist die Erfindung jedoch nicht beschränkt. Es ist in einer anderen Ausgestaltung vorgesehen, dass statt der drei Federschenkel nur lediglich ein einziger Federschenkel vorhanden ist oder zwei oder vier oder fünf. Es ist also jede beliebige Anzahl von Federschenkeln möglich, wobei hierbei vorausgesetzt wird, dass die Federschenkel jeweils als einseitig eingespannte, biegbare Elemente ausgebildet sind, an deren freien biegbaren Enden jeweils die der Rastung zugeordneten Wulstlippen mit den dort angeordneten Keilflächen befestigt sind.

Hieraus ergibt sich, dass auch eine zweistückige Ausführungsform eines Entriegelungsknopfes möglich ist, sodass die Betätigungsfläche des Entriegelungsknopfes aus einem anderen Material bestehen kann als vergleichsweise die daran befestigten Federschenkel.

Die Federschenkel müssen auch nicht unbedingt aus einem Kunststoffmaterial gefertigt sein. Sie können auch aus einem beliebigen Metallmaterial bestehen. Ebenso sind beliebige Kunststoff- Metallverbundmaterialen möglich.
Mit einer anderen Ausgestaltung der vorliegenden Erfindung kann es auch vorgesehen sein, dass der Entriegelungsknopf als durchgehendes Hülsenteil ausgebildet ist, dessen unterer, der Verrastung dienenden Rand, als radial auffaltbarer Rand ausgebildet ist.

Dieses radiale Federvermögen kann entweder durch Schlitze im Material des Entriegelungsknopfes vorgesehen werden oder es können auch zwei gegeneinander verschiebbare Hülsen vorgesehen werden, wobei immer nur wesentlich ist, dass der untere Rand des Entriegelungsknopfes die Rastmechanik trägt und radial federbelastet nach außen federnd vorgespannt ist. Ebenso könnte der Verriegelungsknopf nicht federnde Schenkel besitzen und am unteren Ende anstatt des Wulstes ein radial verschiebbares Element aufnehmen. Dies könnte beispielsweise eine Kugel in einer radial verlaufenden Bohrung sein.

Ebenso sind Führungsbewegungen möglich, die nicht nur eine reine axiale Verschiebbewegung des Entriegelungsknopfes mit den daran befestigten Federschenkeln beschreiben, sondern darüber hinaus, in anderen Ausführungsbeispielen, auch eine kombinierte Verschiebe- und Drehbewegung des Entriegelungsknopfes, die auf Grund seiner Verschiebe- und Drehbewegung dann eine Aufweitung der Federschenkel in radialer Richtung auswärts gerichtet, entlang einer Führungskulisse ausführt.

Im Folgenden wird die Erfindung anhand von lediglich einen Ausführungsweg darstellenden Zeichnungen näher erläutert. Hierbei gehen aus den Zeichnungen und ihrer Beschreibung weitere Merkmale und Vorteile der Erfindung hervor.

Es zeigen:
- Figur 1:: schematisiert im Halbschnitt ein Rastbolzen nach der Erfindung in Ruhestellung.
- Figur 2:: der Rastbolzen nach Figur 1 in leicht gedrücktem Zustand des Entriegelungsknopfes, jedoch ohne weitere Funktion.
- Figur 3:: der Rastbolzen bei gedrücktem Entriegelungsknopf
- Figur 4:: der Rastbolzen bei gedrücktem Entriegelungsknopf und gezogenem und arretiertem Ziehknopf.
- Figur 5:: der Rastbolzen in einer abgewandelten Ausführungsform, der nur in einer oberen Stellung gezogen und arretiert werden kann, jedoch nicht in einer unteren Stellung.
- Figur 6:: der Rastbolzen in einer dritten Ausführungsform, der nur in einer unteren Raststellung gerastet und arretiert werden kann, nicht jedoch in einer gezogenen Stellung, wenn der Ziehknopf nach oben gezogen ist.
- Figur 7:: die Unteransicht des Ziehknopfes
- Figur 8:: die Oberansicht des Ziehknopfes bei entferntem Entriegelungsknopf
- Figur 9:: die Seitenansicht des Ziehknopfes
- Figur 10:: der Schnitt durch den Ziehknopf
- Figur 11:: eine vergrößerte Darstellung am Innenumfang des Ziehknopfes
- Figur 12:: die Seitenansicht der Führungshülse
- Figur 13:: Schnitt durch die Führungshülse nach Figur 12
- Figur 14:: die Unteransicht des Entriegelungsknopfes
- Figur 15:: die Seitenansicht des Entriegelungsknopfes
- Figur 16:: ein Schnitt durch den Entriegelungsknopf
- Figur 17:: die Detaildarstellung am Außenumfang des Entrieglungsknopfes
- Figur 18:: perspektivische Ansicht des Entriegelungsknopfes
- Figur 19:: die Seitenansicht des Raststiftes
- Figur 20:: die Vergrößerung der Sperrstellung nach Figur 1 (Sperren in der Ruhestellung)
- Figur 21:: die Vergrößerung der Sperrstellung nach Figur 4 (Sperren in der angehobenen Stellung)
- Figur 22:: eine abgewandelte Ausführungsform der Rastmechanik, die am Innenumfang der Führungshülse angeordnet ist.

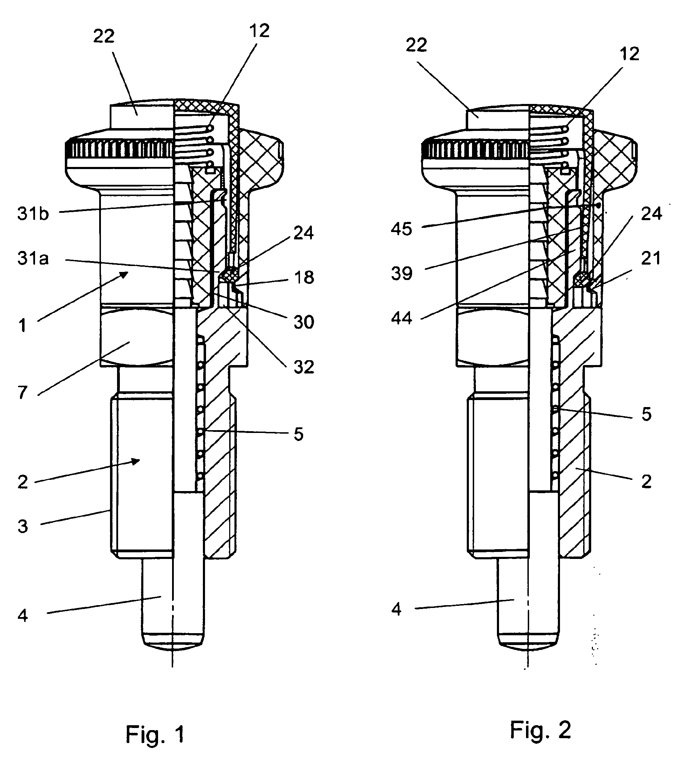

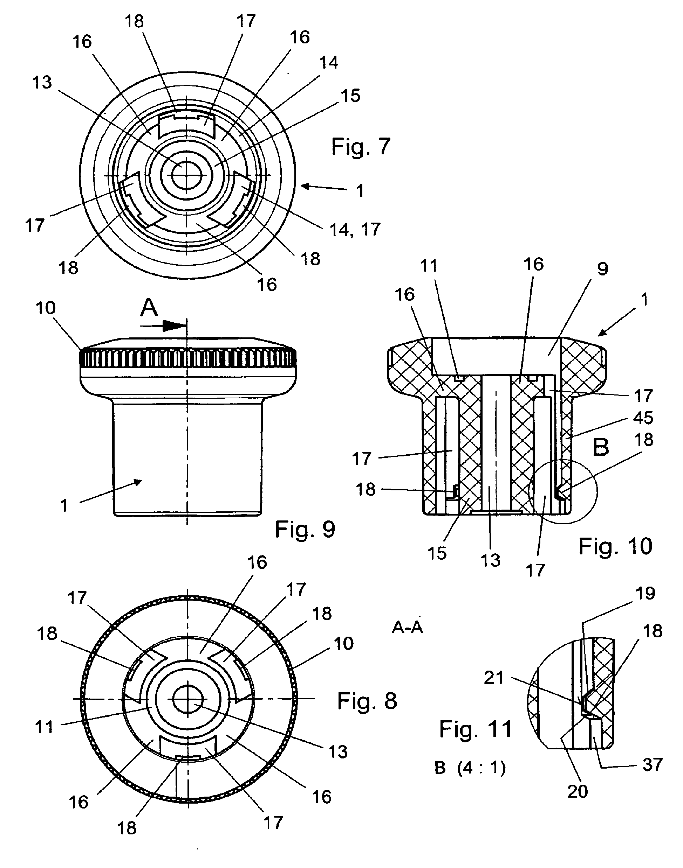

In Figur 1 ist allgemein ein Rastbolzen mit Rastsperre und Entriegelungsknopf dargestellt. Er besteht im Wesentlichen aus einem Ziehknopf 1, der bevorzugt aus einem Kunststoffteil ausgebildet ist und in den Figuren 7 bis 11 näher beschrieben ist. Es ist natürlich möglich, den Ziehknopf als Metallteil auszubilden.

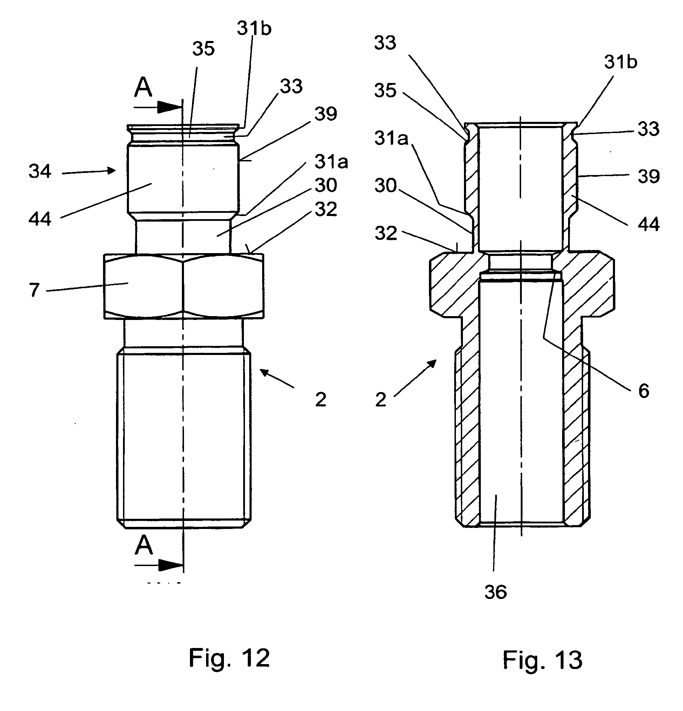

Der Ziehknopf 1 ist federbelastet axial verschiebbar auf einer Führungshülse 2 geführt, die bevorzugt als Metallteil ausgebildet ist und in den Figuren 12 und 13 näher dargestellt ist.

Es versteht sich von selbst, dass alle Materialangaben, die in der vorliegenden Beschreibung vorgenommen werden, untereinander austauschbar und auch veränderbar sind. Wenn also ein bestimmtes Material als "Metallmaterial" beschrieben wird, ist dies nicht einschränkend zu verstehen.

Ferner ist wichtig, dass an der Führungshülse 2 ein Einschraubgewinde 3 angeordnet ist, mit dem die Führungshülse 2 an einer beliebigen Maschinenfläche eingeschraubt werden kann. Hierbei kann das Einschrauben mit Hilfe des Einschraub-Sechskant 7 vorgenommen werden. Die Führungshülse 2 könnte anstatt eines Befestigungsgewindes auch einen Befestigungsflansch aufweisen.

In der in Figur 1 dargestellten Stellung ist der Rastbolzen in seiner verrasteten Stellung dargestellt, das bedeutet, dass aus der unteren Mittelbohrung der Führungshülse 2 ein Raststift 4 herausragt, der in eine nicht näher dargestellte Bohrung an einem gegenüberliegenden Maschinenteil eingreift.

Die Druckfeder 5 zieht den Raststift 4 nach unten, bis der Ziehknopf 1 an der Absatzfläche 32 der Führungshülse 2 federbelastet anliegt.

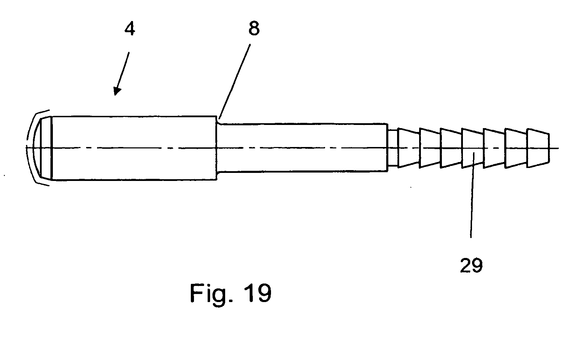

Die Druckfeder 5 stützt sich einerseits an einer Anschlagkante 8 des Raststiftes 4 gem. Figur 19 ab und liegt andererseits federbelastet an einer Anschlagfläche 6 am Innenumfang der Mittelbohrung 36 der Führungshülse 2 an.

In der in Figur 1 dargestellten Ruhestellung ist erkennbar, dass der Entriegelungsknopf 22 Federschenkel ausbildet, an deren freien unteren Enden jeweils Wulstlippen 24 angeformt sind.

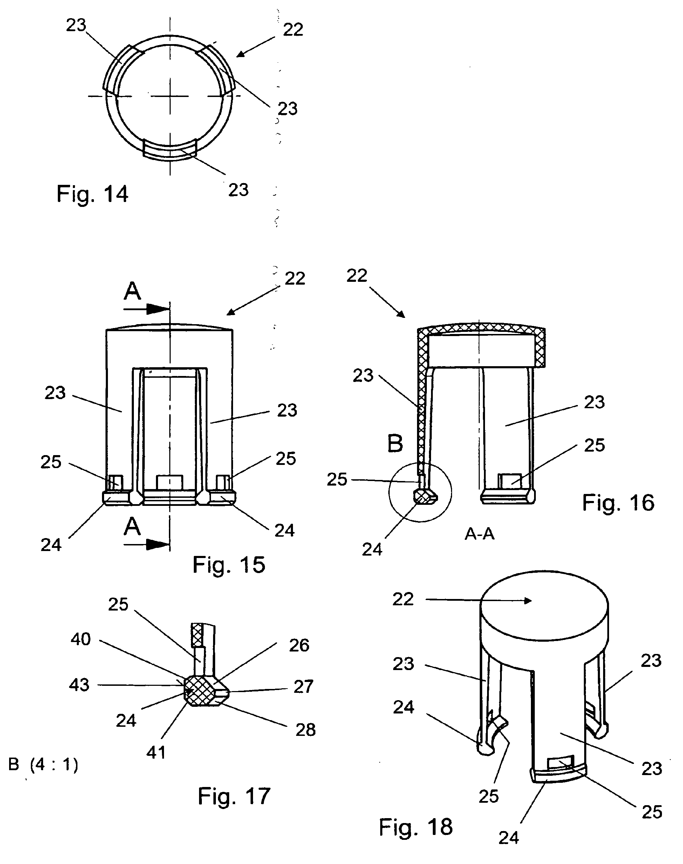

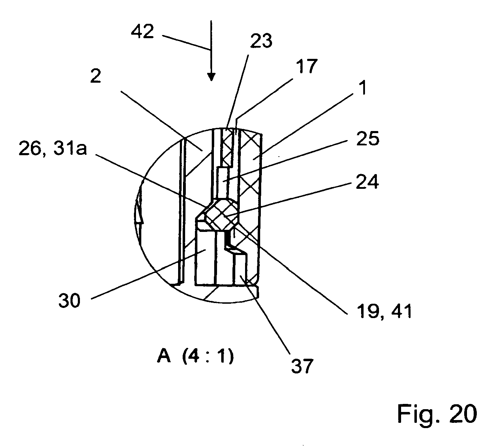

Die verriegelte Stellung nach Figur 20 zeigt eine solche Wulstlippe 24. In Figur 17 in Verbindung mit Figur 20 ist erkennbar, dass die am freien Ende des jeweiligen Federschenkels 23 angeordnete Wulstlippe 24 gegeneinander gerichtete Keilflächen 26, 28 aufweist, zwischen denen eine Gleitfläche 27 angeordnet ist.

Der in den Figuren 14 bis 18 gezeigte Entriegelungsknopf 22 ist also als etwa rundes hülsenförmiges Hohlteil ausgebildet, an dessen oberen Betätigungsfläche sich werkstoffeinstückig drei Federschenkel 23 anschließen, die an ihren unteren freien Enden die vorher beschriebenen Wulstlippen 24 tragen.

Oberhalb jeder Wulstlippe ist eine zugeordnete Ausnehmung 25 angeordnet, die als Fenster ausgebildet ist. Diese Ausnehmung 25 durchbricht die Materialstärke des Federschenkels 23. Hierauf ist die Erfindung jedoch nicht beschränkt. Die Ausnehmung 25 kann auch als Tasche oder als Materialverdünnung ausgebildet sein.

Wichtig ist, dass die Federschenkel 23 gem. Figur 18 radial auswärts gerichtet, federnd vorgespannt und deshalb radial nach außen gespreizt sind.

Der Ziehknopf 1 weist eine zentrale Mittelbohrung 13 auf, in welcher der in Figur 19 dargestellte Raststift 4 mit Hilfe von Widerhaken 29 verankert ist. Damit ist er fest und unlösbar mit dem Ziehknopf verbunden, weil er in dessen Mittelbohrung 13 festgelegt ist. Dieser könnte auch anders verbunden sein.

Der Ziehknopf 1 besteht im Wesentlichen aus einem hülsenförmigen Kunststoffteil, welches eine obere Aufnahme 9 für die Aufnahme des dort eingesetzten Entriegelungsknopfes 22 aufweist. Am Boden der Aufnahme 9 ist eine Ringnut 11 für die Aufnahme des unteren Endes der Druckfeder 12 vorgesehen, die sich mit ihrem anderen gegenüberliegenden Ende an der Innenseite des Entriegelungsknopfes 22 abstützt.

Anstatt der Verwendung einer Druckfeder 12 können auch andere Federmittel verwendet werden, wie z. B. eine Elastomerfeder, eine Schenkelfeder oder andere Federvorspannmittel.

Am Außenumfang trägt der Ziehknopf 1 einen Randerungsring 10, um die Handhabung zu verbessern.

Im Schnitt ist erkennbar, dass der Innenraum des Ziehknopfes 1 durch eine innere Axialhülse 15 ausgefüllt ist, die mit Hilfe von drei Radialstegen 16 am Innenumfang angeformt ist. Damit bilden die Radialstege 16 die Befestigung für die innen durchgehend verlaufende Axialhülse 15.

Im Umfangsbereich jenseits der Radialstege 16 sind somit drei Führungsbahnen 17 eingeformt, die axial von unten nach oben durchlaufen, wobei jede Führungsbahn an ihrem axialen unteren Ende jeweils ein nach innen gerichtete radial nach innen vorspringende Führungsnase 18 ausbildet. Der Außenumfang des Ziehknopfes ist durch einen koaxial die innere Axialhülse 15 umschließenden und einen Ringraum (Ringnut 14) freilassenden Hülsenansatz 45 gebildet.

Der Aufbau einer Führungsnase 18 ist am besten aus Figur 11 zu entnehmen. Jede Führungsnase 18 weist eine obere schräg nach innen verlaufende Keilfläche 19 auf, die in eine axiale Gleitfläche 21 übergeht, an die sich wiederum eine schräg entgegen gesetzt verlaufende Keilfläche 20 anschließt.

Nachdem die Stege 16 nur im oberen Bereich des Ziehknopfes 1 angeordnet sind, ergibt sich so eine Ringnut 14, in deren Bereich die Führungsbahnen 17 für die längs verschiebbare Führung der Federschenkel 23 des Entriegelungsknopfes 22 vorgesehen sind.

Die Ringnut 14 übergreift die Führungsfläche 39 im Bereich eines Führungshalses 34 der Führungshülse 2 (siehe auch Figuren 12 und 13).

Damit ist der Ziehknopf 1 längs verschiebbar auf der Führungshülse und zwar auf dem dortigen Führungshals 34 geführt.

Gem. Figur 12 und 13 weist die Führungshülse 2 unterhalb der Führungsfläche 39 einen ersten Ringansatz 30 auf, der als Ringansatz verminderten Durchmessers ausgebildet ist und der oben eine erste Keilfläche 31 a trägt, die schräg einwärts geneigt ist, wobei im Abstand von dieser Keilfläche 31a eine horizontal verlaufende Absatzfläche 32 ausgebildet ist.

Im Abstand von diesem ersten Ringansatz 30 ist ein oberer zweiter Ringansatz 33 vorgesehen, der wiederum eine Keilfläche 35 trägt.

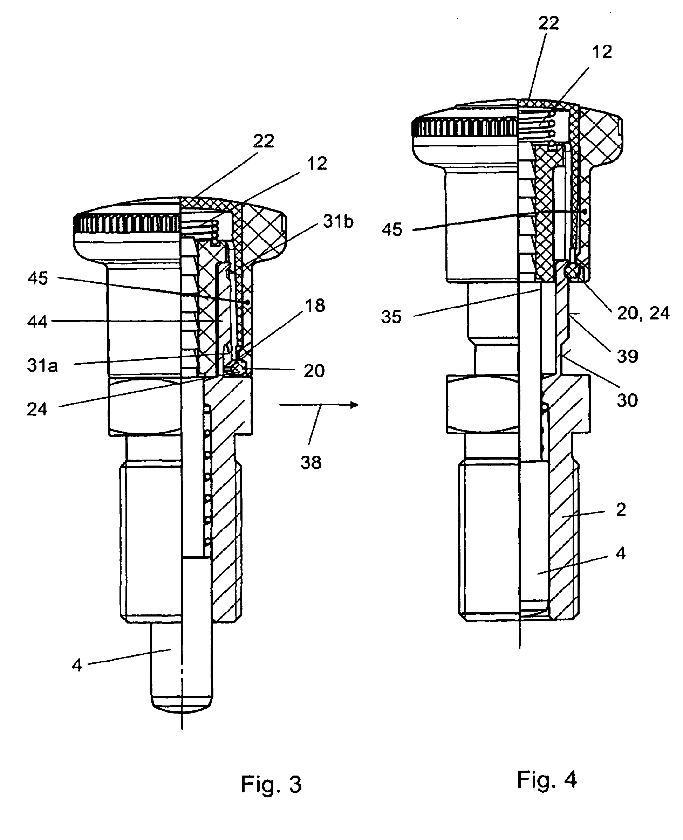

Grundsätzlich lässt sich sagen, dass der untere Ringansatz 30 mit seiner Keilfläche 31 a zur Verriegelung des Ziehknopfes in seiner Ruhestellung dient, wie dies in Figur 1 dargestellt ist, während der obere Ringansatz 33 zur Verrieglung des Ziehknopfes in seiner oberen, angehobenen Stellung dient, wie dies in Figur 4 dargestellt ist.

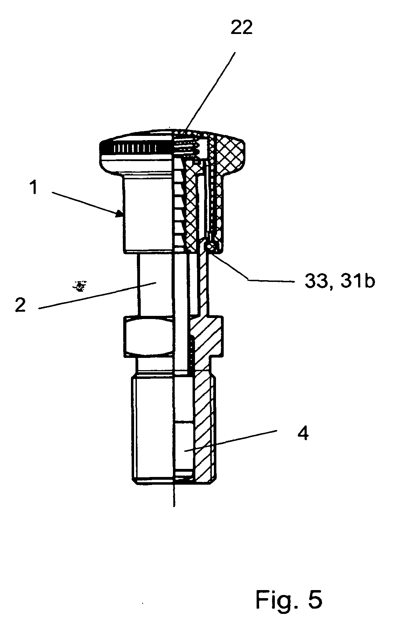

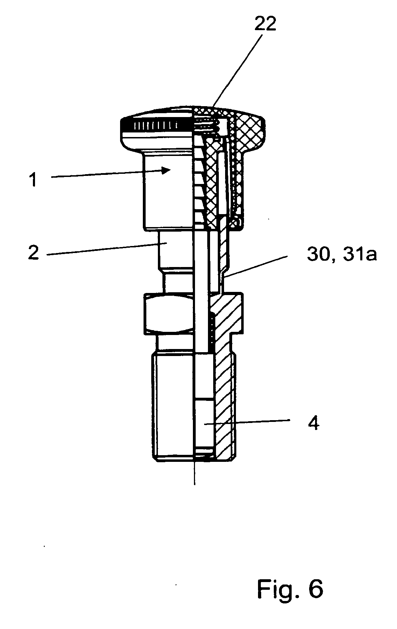

Es versteht sich von selbst, dass einer der beiden Ringansätze (30 oder 33) mit den dazu gehörenden Keilflächen auch entfallen kann, so dass dann als Funktionsteil nur noch eine Verriegelung in der Ruhestellung nach Figur 1 oder eine Verriegelung in der oberen angehobenen Stelle nach Figur 4 gegeben ist. Während das Ausführungsbeispiel nach Figuren 1 bis 4 beide Verriegelungen (in der unteren und in der oberen Stellung) zeigt, zeigen die Ausführungsbeispiele nach Figur 5 die Verriegelung nur in der oberen, angehobenen Stellung, während das Ausführungsbeispiel nach Figur 6 die Verriegelung nur in der unteren Ruhestellung des Ziehknopfes darstellt.

Die Figur 1 zeigt die Ruhestellung der Rastvorrichtung und es ist erkennbar, dass die als Sperrteil fungierenden Wulstlippen 24 des Entrieglungsknopfes 22 zwischen einem Anschlag auf der Führungsnase 18 im Ziehknopf 1 und einem Einstich (Keilfläche 31a) am Außenumfang der Führungshülse 2 klemmt.

Figur 2 zeigt die leicht gedrückte Stellung des Entriegelungsknopfes 22, bei dessen Betätigung die Wulstlippe 24 um den Anschlag auf der Führungsnase 18 des Ziehknopfes 1 herum läuft.

Figur 3 zeigt die gedrückte Stellung des Entriegelungsknopfes 22, wobei dessen Sperrteil (entspricht der Wulstlippe (24)) nach unten gedrückt ist. Es federt radial nach außen gerichtet in die radial nach außen gerichtete und am Innenumfang des Ziehknopfes 1 angeordnete Ausbuchtung mit der Keilfläche 20. Der Ziehknopf ist nun frei und kann gezogen werden. Hierbei ist der Hülsenansatz 45 des Ziehknopfes 1 in Relation zum Hülsenansatz 44 der Führungshülse 2 erkennbar.

Die Figur 4 zeigt die Ausraststellung, bei der der gezogene Ziehknopf in seiner angehobenen Stellung arretiert ist. Die Feder 12 zieht den Entriegelungsknopf 22 mit dem aus Wulstlippen 24 gebildeten Sperrteil nach oben. Durch die Schräge (Keilfläche 31a) am Außenumfang der Führungshülse 2 geht die Wulstlippe 24 in die obere Rille mit den Keilflächen 35, 31 b am Außenumfang der Führungshülse 2. Der Ziehknopf kann dann nicht mehr zurückfahren.

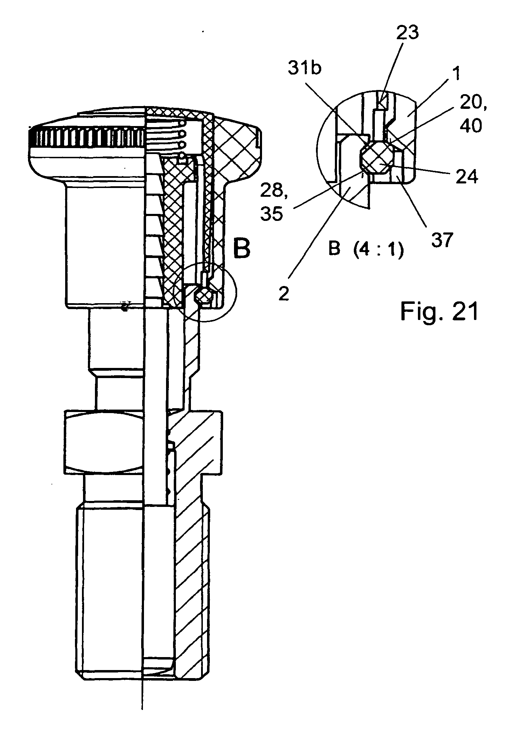

Anhand der Figuren 20 und 21 wird nun an einem weiteren Ausführungsbeispiel ein Verriegelungsvorgang näher erläutert.

Es handelt sich hierbei um den Verrieglungsvorgang, wie er in der Ruhestellung nach Figur 1 des Rastbolzens erreicht wird.

In der verriegelten Stellung ist die Wulstlippe 24 in keilförmigem Eingriff und damit eingeklemmt in einer sich ausbildenden Ringnut der Führungshülse und des Ziehknopfes, wie nachstehend anhand der Figur 20 erläutert wird.

Nachdem die Wulstlippe 24 eine größere Materialstärke als vergleichsweise die Wandung des Federschenkels 23 hat, an dem sie angeformt ist, liegt der Federschenkel 23 in dem Zwischenraum zwischen der Führungshülse 2 und dem Ziehknopf 1 im Bereich der vorher beschriebenen Führungsbahn 17 des Ziehknopfes 1.

Im verriegelten Zustand liegt somit die Keilfläche 26 der Wulstlippe 24 lastübertragend an der zugeordneten Keilfläche 31 a der Führungshülse 2 an. Gleichzeitig gegenüberliegend und mit entgegengesetzter Schrägung liegt eine Keilfläche 41 der Wulstlippe an einer zugeordneten gleichgeschrägten Keilfläche 19 des Ziehknopfes 1 an. Damit ist die Wulstlippe 24 in einer umlaufenden Klemmausnehmung oder Rastaufnehmung zwischen Ziehknopf 1 und Führungshülse 2 eingeklemmt und kann nicht mehr herausgezogen werden. Dies bedeutet, dass der Ziehknopf 1 gesperrt ist und nicht in Gegenrichtung zur eingezeichneten Pfeilrichtung 42 nach oben entgegen der Kraft der Druckfeder 5 herausgezogen werden kann.

Zur Entriegelung dieser Verriegelungssituation ist es erforderlich, dass der Entriegelungsknopf 22 in Pfeilrichtung 42 nach unten gedrückt wird, wodurch die beiden Keilflächen 19, 41 gegeneinander verschoben werden und die Wulstlippe 24 radial nach innen gepresst und entgegen seiner Federkraft in den Ringansatz 30 der Führungshülse 2 eingeschoben wird.

Damit kommt die Wulstlippe 24 frei von der Keilfläche 19 des Ziehknopfes 1.

Die Wulstlippe 24 gleitet mit ihrer Gleitfläche 43 (siehe Figur 17) an der Gleitfläche 21 des Ziehknopfes 1 entlang und gelangt so in die größer dimensionierte Aufnahmetasche 37 des Ziehknopfes 1. Damit kommt die Wulstlippe 24 frei vom Ziehknopf 1 und der Ziehknopf 1 kann nun in Gegenrichtung zur eingezeichneten Pfeilrichtung 42 nach oben entgegen der Kraft der Druckfeder 5 gezogen werden.

Die Druckfeder 12 macht die Rückstellung des Entriegelungsknopfes 22, wenn er gedrückt ist, wie dies bei Figur 2 und Figur 3 dargestellt ist.

In Figur 21 wird die obere Raststellung dargestellt, wie sie bei dem Ausführungsbeispiel nach Figur 4 gegeben ist.

Hierbei ist erkennbar, dass sich die Keilflächen 28, 35 in der oberen verriegelten Stellung aneinander anlegen, wobei die Keilfläche 28 zur Wulstlippe 24 gehört, während die Keilfläche 35 zur Führungshülse 2 gehört.

Die Verrastung findet im übrigen gem. Figur 13 im Bereich des dort gezeigten Ringansatzes 33 statt.

Gleichzeitig findet eine Verriegelung zwischen den Keilflächen 20 und 40 statt. Die Keilfläche 20 gehört zum Ziehknopf 1, während die Keilfläche 40 zum Entriegelungsknopf 22 und zur Wulstlippe 24 gehört.

In der gleichen Weise, wie bereits schon anhand der Figur 20 beschrieben wurde, reicht ein Druck in Pfeilrichtung 42 auf den Federschenkel 23 aus, um die beiden vorher genannten Keilflächenpaare zum Entlanggleiten zu bringen und die Wulstlippe 24 gleitet dann radial auswärts gerichtet in den größeren Freiraum der Aufnahmetasche 37 im Ziehknopf 1 hinein, wodurch die Verriegelung zwischen dem Ziehknopf 1 und der Führungshülse 2 wieder aufgehoben ist.

Wenn eine Sperrfunktion in angehobener und abgesenkter Stellung des Ziehknopfes 1 gewünscht ist, hat die Führungshülse zwei zueinander beabstandet angeordnete Ringansätze 30 und 33, wie am besten aus Figur 12 und 13 erkennbar. Der untere Ringansatz 30 bildet mit seinen Keilflächen 31 a die Sperrung des Ziehknopfes 1 in der abgesenkten Ruhestellung, während der obere Ringansatz 33 mit seinen Keilflächen 35, 31 b die Sperrung des Ziehknopfes 1 in der angehobenen Stellung zeigt. Nachdem beide Sperrfunktionen gleich aufgebaut sind und gleich funktionieren, gelten für die gleichen Teile auch die gleichen Bezugszeichen. Es versteht sich von selbst, dass entweder beide Sperrfunktionen vorhanden sein können oder jeweils nur eine der beiden Sperrfunktionen.

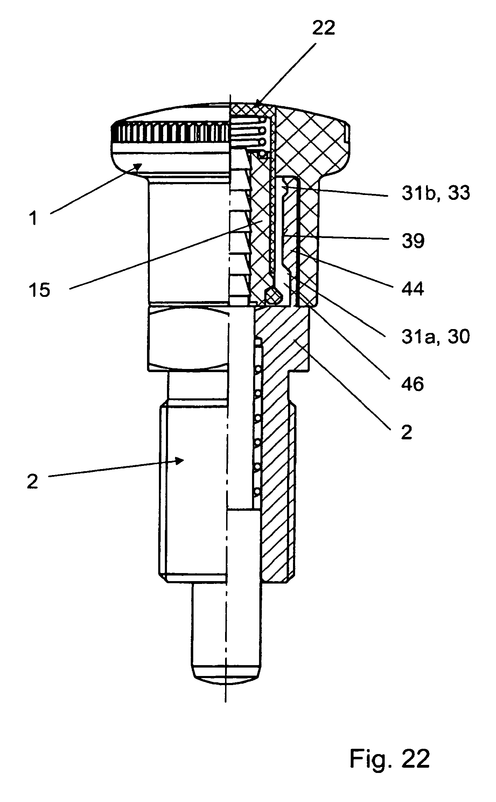

Die Figur 22 zeigt als abgewandeltes Ausführungsbeispiel die Anordnung der Rastmechanik am Innenumfang einer Mittenbohrung 46 in der Führungshülse 2. Während die vorher beschriebenen Ausführungsbeispiele die Anordnung der Rastmechanik am Außenumfang der Führungshülse 2 zeigten, zeigt dieses Ausführungsbeispiel nun die äquivalente Anordnung am Innenumfang der Führungshülse 2. Für alle gleichen Teile gelten die gleichen Bezugszeichen. Die Rastmechanik und deren Funktionsweise sind identisch aus den oben beschriebenen Ausführungsbeispielen zu entnehmen. Der einzige Unterschied ist, dass die Führungshülse 2 nun eine Mittenbohrung 46 aufweist, an deren Innenumfang (und nicht am Außenumfang, wie bei den anderen Ausführungen) die Ringansätze 30 und 33 mit den Keilflächen 31 a und 35, 31 b angeordnet sind.

### Zeichnungslegende

- 1: Ziehknopf
- 2: Führungshülse
- 3: Einschraubgewinde
- 4: Raststift
- 5: Druckfeder (unten)
- 6: Anschlagfläche
- 7: Einschraub-Sechskant
- 8: Anschlagkante
- 9: Aufnahme
- 10: Randrierungsring
- 11: Nut für Druckfeder
- 12: Druckfeder
- 13: Mittelbohrung
- 14: Ringnut
- 15: Axialhülse
- 16: Radialstege
- 17: Führungsbahn
- 18: Führungsnase
- 19: Keilfläche oben (von 1)
- 20: Keilfläche unten (von 1)
- 21: Gleitfläche (von 1)
- 22: Entriegelungsknopf
- 23: Federschenkel
- 24: Wulstlippe
- 25: Ausnehmung
- 26: nach oben weisende Keilfläche (von Wulstlippe 24)
- 27: Gleitfläche (von 24)
- 28: nach unten weisende Keilfläche (von 24)
- 29: Widerhaken
- 30: Ringansatz
- 31: a, b nach unten weisende Keilflächen (von 2)
- 32: Abatzfläche
- 33: Ringansatz
- 34: Führungshals
- 35: nach oben weisende Keilfläche (von 2)
- 36: Mittelbohrung
- 37: Aufnahmetasche (von 1) -
- 38: Pfeilrichtung
- 39: Führungsfläche
- 40: nach oben weisende Keilfläche (von 24)
- 41: nach unten weisende Keilfläche (von 24)
- 42: Pfeilrichtung
- 43: Gleitfläche (von 24)
- 44: Hülsenansatz (von 2)
- 45: Hülsenansatz (von 1)
- 46: Mittenbohrung (von 2)

## Patentansprüche

1. Federbelasteter Rastbolzen mit einem Ziehknopf (1) und einem mit diesem verbundenen Raststift (4), der federbelastet in einer Führungshülse (2) verschiebbar ist, die in eine zugeordnete Bohrung in ein Maschinen- und Möbelteil einschraubbar ist, wobei der Raststift (4) in die Bohrung einrückbar ist und eine Rastsperre aufweist, die den gezogenen Raststift (4) in seiner nicht eingerückten Stellung arretiert, und/oder eine Rastsperre aufweist, die den Raststift (4) in seiner eingerückten Stellung arretiert, **dadurch gekennzeichnet, dass** am Ziehknopf (1) eine in axialer Richtung ausgerichtete innere Axialhülse (15) angeformt ist, und der Außenumfang des Ziehknopfes (1) durch einen koaxial die innere Axialhülse (15) umschließenden und eine Ringnut (14) freilassenden Hülsenansatz (45) gebildet ist, wobei in diese Ringnut (14) ein Hülsenansatz (44) der Führungshülse (2) längsverschiebbar federbelastet eingreift und dort arretierbar ist, und dass im Ziehknopf (1) ein axial federbelastet verschiebbarer Entriegelungsknopf (22) angeordenet ist, der mit seinem der Arretierung dienenden Ende die Ringnut (14) zwischen dem radial einwärts gerichteten Innenumfang des Hülsenansatzes (45) des Ziehknopfes (1), sowie dem radial auswärts gerichteten Aussenumfang des Hülsenansatzes (44) der Führungshülse (2) oder alternativ zwischen dem radial einwärts gerichteten Innenumfang des Hülsenansatzes (44) der Führungshülse (2) sowie dem radial auswärts gerichteten Außenumfang der Axialhülse (15) des Ziehknopfes (1) ragt.

2. Rastbolzen nach Anspruch 1, **dadurch gekennzeichnet, dass** der Entriegelungsknopf (22) Federschenkel (23) trägt, an deren freien äußeren Enden jeweils eine Wulstlippe (24) angeformt ist, die gegeneinander gerichtete Keilflächen (26, 28) ausbildet, welche der Verrastung dienen und zwischen denen jeweils eine Gleitfläche (27) angeordnet ist.

3. Rastbolzen nach Anspruch 1 oder 2, **dadurch gekennzeichnet, dass** in der Ringnut (14) axial durchlaufende Führungsbahnen (17) für die Führung der Federschenkel (23) des Entriegelungsknopfes (22) vorgesehen sind.

4. Rastbolzen nach Anspruch 3, **dadurch gekennzeichnet, dass** jede Führungsbahn (17) an ihrem in Druckrichtung (42) des Entriegelungsknopfes (22) liegenden axialen Ende, jeweils eine radial nach innen vorspringende Führungsnase (18) ausbildet, welche eine entgegen der Druckrichtung (42) des Entriegelungsknopfes (22) liegende schräg nach radial innen verlaufende Keilfläche (19) aufweist, die in eine axiale Gleitfläche (21) übergeht, an die sich wiederum eine schräg entgegengesetzt verlaufende Keilfläche (20) anschließt.

5. Rastbolzen nach einem der Ansprüche 1 bis 4, **dadurch gekennzeichnet, dass** die Führungshülse (2) einen ersten Ringansatz (30) verminderten Durchmessers aufweist, der eine erste Keilfläche (31 a) trägt, die schräg geneigt ist, und zur Verriegelung des Ziehknopfes (1) dient und damit des Raststiftes (4) in seiner in die Bohrung des Maschinen- und Möbelteils eingerückten Stellung dient ,wobei entgegen der Druckrichtung (42) des Entriegelungsknopfes (22) im axialen Abstand vom ersten Ringansatz (30) ein zweiter Ringansatz (33) mit einer zweiten Keilfläche (35) vorgesehen ist, welche der Verriegelung des Ziehknopfes (1) dient und damit des Raststiftes (4) in seiner aus der Bohrung des Maschinen- und Möbelteils ausgerückten Stellung dient.

## Claims

1. Spring-loaded latching bolt with an extraction button (1) and a latching pin (4), which is connected thereto and can be displaced in a spring-loaded manner in a guide sleeve (2), which can be screwed into an associated bore in a machine and furniture part, the latching pin (4) being engageable in the bore and having a latching lock, which locks the extracted latching pin (4) in its non-engaged position and/or having a latching lock, which locks the latching pin (4) in its engaged position, **characterised in that** an inner axial sleeve (15) oriented in the axial direction is formed on the extraction button (1), and the outer periphery of the extraction button (1) is formed by a sleeve attachment piece (45) coaxially enclosing the inner axial sleeve (15) and leaving an annular groove (14) free, a sleeve attachment piece (44) of the guide sleeve (2) engaging longitudinally displaceably in a spring-loaded manner in this annular groove (14) and being lockable there, and **in that** an unlocking button (22) that can be axially displaced in a spring-loaded manner is arranged in the extraction button (1) and said unlocking button projects with its end used for locking into the annular groove (14) between the radially inwardly directed inner periphery of the sleeve attachment piece (45) of the extraction button (1), and the radially outwardly directed outer periphery of the sleeve attachment piece (44) of the guide sleeve (2) or, alternatively, between the radially inwardly directed inner periphery of the sleeve attachment piece (44) of the guide sleeve (2), and the radially outwardly directed outer periphery of the axial sleeve (15) of the extraction button (1).

2. Latching bolt according to claim 1, **characterised in that** the unlocking button (22) has spring legs (23), on the free outer ends of which a bead lip (24) is formed in each case, which forms wedge faces (26, 28) directed toward one another, which are used for latching and between which a sliding face (27) is arranged in each case.

3. Latching bolt according to claim 1 or 2, **characterised in that** guide paths (17) running axially are provided in the annular groove (14) to guide the spring legs (23) of the unlocking button (22).

4. Latching bolt according to claim 3, **characterised in that** each guide path (17), at its axial end located in the pressing direction (42) of the unlocking button (22), in each case forms a radially inwardly projecting guide nose (18), which has a wedge face (19), which lies counter to the pressing direction (42) of the unlocking button (22), runs obliquely radially inwardly and passes into an axial sliding face (21), in turn adjoined by a wedge face (20) running obliquely in an opposing manner.

5. Latching bolt according to any one of claims 1 to 4, **characterised in that** the guide sleeve (2) has a first annular attachment piece (30) of reduced diameter, which carries a first wedge face (31 a), which is obliquely inclined and is used to lock the extraction button (1) and therefore the latching pin (4) in its position engaged in the bore of the machine and furniture part, a second annular attachment piece (33) with a second wedge face (35) being provided counter to the pressing direction (42) of the unlocking button (22) at an axial spacing from the first annular attachment piece (30), said second wedge face being used to lock the extraction button (1) and therefore the locking pin (4) in its position disengaged from the bore of the machine and furniture part.

## Revendications

1. Boulon d'arrêt à ressort, avec un bouton de traction (1) et une tige d'arrêt (4) qui est reliée à celui-ci et qui est apte à coulisser par ressort dans un manchon de guidage (2) apte à être vissé dans un perçage associé, dans un élément de machine et de meuble, étant précisé que la tige d'arrêt (4) est apte à être rentrée dans le perçage et comporte un mécanisme d'arrêt qui arrête en position non rentrée la tige d'arrêt (4) tirée, et/ou comporte un mécanisme d'arrêt qui arrête en position rentrée ladite tige (4), **caractérisé en ce qu'**un manchon axial intérieur (15) qui est dirigé dans le sens axial est rapporté sur le bouton de traction (1), et la circonférence extérieure du bouton de traction (1) est formée par un embout de manchon (45) qui entoure coaxialement le manchon axial intérieur (15) et dégage une rainure annulaire (14), étant précisé qu'un embout de manchon (44) du manchon de guidage (2) entre, mobile longitudinalement et contraint par ressort, dans cette rainure annulaire (14) et peut être arrêté dans celle-ci, et **en ce que** dans le bouton de traction (1) est disposé un bouton de déverrouillage (22) qui est apte à coulisser par ressort et qui dépasse, avec son extrémité servant à l'arrêt, dans la rainure annulaire (14) entre la circonférence intérieure, dirigée radialement vers l'intérieur, de l'embout de manchon (45) du bouton de traction (1) et la circonférence extérieure, dirigée radialement vers l'extérieur, de l'embout de manchon (44) du manchon de guidage (2), ou à titre de variante entre la circonférence intérieure, dirigée radialement vers l'intérieur, de l'embout de manchon (44) du manchon de guidage (2) et la circonférence extérieure, dirigée radialement vers l'extérieur, du manchon axial (15) du bouton de traction (1).

2. Boulon d'arrêt selon la revendication 1, **caractérisé en ce que** le bouton de déverrouillage (22) porte des branches élastiques (23) sur l'extrémité extérieure libre desquelles est rapportée une lèvre (24) qui forme des surfaces en coin (26, 28) qui sont dirigées les unes vers les autres, qui servent à l'enclenchement et entre lesquelles est disposée à chaque fois une surface de glissement (27).

3. Boulon d'arrêt selon la revendication 1 ou 2, **caractérisé en ce qu'**il est prévu dans la rainure annulaire (14) des glissières (17) continues axialement pour le guidage des branches élastiques (23) du bouton de déverrouillage (22).

4. Boulon d'arrêt selon la revendication 3, **caractérisé en ce que** chaque glissière (17), à son extrémité axiale située dans le sens de pression (42) du bouton de déverrouillage (22), forme une saillie de guidage (18) saillant radialement vers l'intérieur et qui présente une surface en coin (19) qui s'étend radialement vers l'intérieur, en biais, en sens inverse par rapport au sens de pression (42) du bouton de déverrouillage (22), et qui se prolonge par une surface de glissement axiale (21) se prolongeant elle-même par une surface en coin (20) qui s'étend en sens inverse, en biais.

5. Boulon d'arrêt selon l'une des revendications 1 à 4, **caractérisé en ce que** le manchon de guidage (2) présente un premier épaulement annulaire (30) à diamètre réduit, qui porte une première surface en coin (31a) inclinée et qui sert au verrouillage du bouton de traction (1) et, ainsi, de la tige d'arrêt (4) dans sa position rentrée dans le perçage de l'élément de machine et de meuble, étant précisé qu'il est prévu, en sens inverse par rapport au sens de pression (42) du bouton de déverrouillage (22), à une distance axiale du premier épaulement annulaire (30), un second épaulement annulaire (33) avec une seconde surface en coin (35) qui sert au verrouillage du bouton de traction (1) et, ainsi, de la tige d'arrêt (4) dans sa position sortie du perçage de l'élément de machine et de meuble.
